(19) Europäisches Patentamt
European Patent Office
Office européen des brevets

(11) **EP 3 950 323 A1**

(12) **EUROPEAN PATENT APPLICATION**
published in accordance with Art. 153(4) EPC

(43) Date of publication:
**09.02.2022 Bulletin 2022/06**

(21) Application number: **20783408.6**

(22) Date of filing: **01.04.2020**

(51) International Patent Classification (IPC):
**B32B 25/14** (2006.01)    **B32B 27/30** (2006.01)
**F16L 11/04** (2006.01)

(52) Cooperative Patent Classification (CPC):
**B32B 25/14; B32B 27/30; F16L 11/04;** Y02A 20/20

(86) International application number:
**PCT/JP2020/015041**

(87) International publication number:
**WO 2020/204076 (08.10.2020 Gazette 2020/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.04.2019 JP 2019072264**

(71) Applicant: **AGC INC.**
**Chiyoda-ku,**
**Tokyo 1008405 (JP)**

(72) Inventor: **YAGI, Keisuke**
**Tokyo 100-8405 (JP)**

(74) Representative: **Müller-Boré & Partner**
**Patentanwälte PartG mbB**
**Friedenheimer Brücke 21**
**80639 München (DE)**

(54) **LAMINATE MANUFACTURING METHOD AND LAMINATE**

(57)   To provide a laminate excellent in alkali resistance and interlaminate bonding at high temperature, and a laminate.

A method for producing a laminate, which comprises producing a laminate having a layer of a first composition containing a copolymer having fluorine atoms and a layer of a second composition containing a non-fluorinated polymer; and reacting the first composition and the second composition to produce a laminate having a first crosslinked layer formed of the first composition and a second crosslinked layer formed of crosslinked product of the second composition,

wherein the absolute value of the difference between ML of the first composition and ML of the second composition is from 0 to 5.0, where ML is the minimum value of the torque when crosslinking test is carried out by a rubber process analyzer.

**Description**

TECHNICAL FIELD

The present invention relates to a method for producing a laminate, and a laminate.

BACKGROUND ART

Fluororubbers are excellent in heat resistance, chemical resistance, oil resistance, weather resistance, etc., and are thereby suitable for application under severe environment under which a general purpose rubber cannot be used.
As fluororubbers, for example, a crosslinked product (FKM) of a copolymer having units based on vinylidene fluoride and units based on hexafluoropropylene, a crosslinked product (FEPM) of a copolymer having units based on tetrafluoroethylene and units based on propylene, and a crosslinked product (FFKM) of a copolymer having units based on tetrafluoroethylene and units based on a perfluoro(alkyl vinyl ether), have been known.
Since fluororubbers are generally expensive, a laminate having a fluororubber and a non-fluororubber laminated has been proposed (Patent Document 1). Patent Document 1 discloses a rubber laminate having a vulcanizable rubber composition comprising a fluororubber and a quaternary ammonium salt derivative of triazine thiol, and a vulcanizable rubber composition other than a fluororubber, vulcanized and bonded.

PRIOR ART DOCUMENTS

PATENT DOCUMENT

    Patent Document 1: JP-A-H05-320453

DISCLOSURE OF INVENTION

TECHNICAL PROBLEM

However, the rubber laminate described in Examples in Patent Document 1 is a rubber laminate of FKM and a non-fluororubber and is insufficient in alkali resistance. Accordingly, the rubber laminate described in Examples in Patent Document 1 is not suitable for application under high alkali conditions, for example as a fuel rubber hose for automobiles.
In general, fluororubbers such as FEPM and FFKM are excellent in alkali resistance as compared with FKM. However, the present inventor has found that a laminate having FEPM or FFKM and a non-fluororubber laminated so as to improve alkali resistance, is inferior in adhesion between layers that is interlaminar bonding, and may undergo peeling at the interface between layers at high temperature of about 150°C.
Under these circumstances, the present invention provides a laminate excellent in alkali resistance and interlaminar bonding at high temperature, and a method for producing a laminate excellent in alkali resistance and interlaminar bonding at high temperature.

SOLUTION TO PROBLEM

The present invention has the following embodiments.

    [1] A method for producing a laminate, which comprises producing a laminate having a layer of a first composition containing a fluorinated polymer which is a copolymer having units based on tetrafluoroethylene and units based on propylene or a copolymer having units based on tetrafluoroethylene and units based on a perfluoro(alkyl vinyl ether), a crosslinking agent and a crosslinking co-agent, and a layer of a second composition containing a non-fluorinated polymer and a crosslinking agent; and

    reacting the first composition and the second composition to produce a laminate having a first crosslinked layer formed of the first composition and a second crosslinked layer formed of the second composition,
    wherein the absolute value of the difference between ML of the first composition and ML of the second composition is from 0 to 5.0, where ML is the minimum value of the torque when crosslinking test is carried out by a rubber process analyzer.

[2] The method for producing a laminate according to [1], wherein the second composition further contains a crosslinking co-agent.

[3] The method for producing a laminate according to [1] or [2], wherein the absolute value of the difference between the degree of crosslinking of the first composition as shown in the following formula 3 and the degree of crosslinking of the second composition as shown in the following formula 3 is from 0 to 200:

$$\text{degree of crosslinking} = MH - ML \qquad \text{formula 3}$$

wherein MH is the maximum value of the torque, and ML is the minimum value of the torque, when crosslinking test is carried out by a rubber process analyzer.

[4] The method for producing a laminate according to any one of [1] to [3], wherein each of the crosslinking agents in the first composition and in the second composition is an organic peroxide.

[5] The method for producing a laminate according to any one of [1] to [4], wherein the copolymer having units based on tetrafluoroethylene and units based on propylene contained in the first composition further has iodine atoms.

[6] The method for producing a laminate according to any one of [1] to [5], wherein the copolymer having units based on tetrafluoroethylene and units based on a perfluoro(alkyl vinyl ether) contained in the first composition further has iodine atoms.

[7] The method for producing a laminate according to any one of [1] to [6], wherein the copolymer having units based on tetrafluoroethylene and units based on propylene contained in the first composition further has units based on a monomer having two or more polymerizable unsaturated bonds.

[8] The method for producing a laminate according to any one of [1] to [7], wherein the copolymer having units based on tetrafluoroethylene and units based on a perfluoro(alkyl vinyl ether) contained in the first composition further has units based on a monomer having two or more polymerizable unsaturated bonds.

[9] The method for producing a laminate according to [7] or [8], wherein the units based on a monomer having two or more polymerizable unsaturated bonds are a compound represented by the following formula 4:

$$CR^1R^2 = CR^3 - R^4 - CR^5 = CR^6R^7 \qquad \text{formula 4}$$

wherein $R^1$, $R^2$, $R^3$, $R^5$, $R^6$ and $R^7$ are each independently a hydrogen atom, a fluorine atom or a methyl group, $R^4$ is a $C_{1-25}$ alkylene group, a $C_{1-25}$ alkylene group having an etheric oxygen atom, a $C_{1-25}$ fluoroalkylene group, a $C_{1-25}$ fluoroalkylene group having an etheric oxygen atom, or an oxygen atom.

[10] A laminate having a first crosslinked layer formed of a first composition containing a fluorinated polymer which is a copolymer having units based on tetrafluoroethylene and units based on propylene or a copolymer having units based on tetrafluoroethylene and units based on a perfluoro(alkyl vinyl ether), a crosslinking agent and a crosslinking co-agent, and a second crosslinked layer formed of a second composition containing a non-fluorinated polymer and a crosslinking agent,

wherein the absolute value of the difference between ML of the first composition and ML of the second composition is from 0 to 5.0, where ML is the minimum value of the torque when crosslinking test is carried out by a rubber process analyzer.

[11] A rubber hose using the laminate as defined in [10].

## ADVANTAGEOUS EFFECTS OF INVENTION

According to the present invention, it is possible to obtain a laminate excellent in alkali resistance and interlaminar bonding at high temperature.

## DESCRIPTION OF EMBODIMENTS

Meanings of the following terms in this specification are as follows.

A "monomer" means a compound having a polymerizable unsaturated bond. The polymerizable unsaturated bond may, for example, be a double bond or a triple bond between carbon atoms.

A "unit based on a monomer" generally means an atomic group directly formed by polymerization of one molecule of a monomer and an atomic group formed by chemical conversion of a part of the atomic group. A "unit based on a monomer" will sometimes be referred to as a "monomer unit". A unit based on a specific monomer may sometimes be referred to as a specific monomer name or abbreviated name and "unit". For example, tetrafluoroethylene will be referred to as "TFE", and a unit based on tetrafluoroethylene will be referred to as a "TFE unit".

The "storage elastic modulus G'" is a value measured in accordance with ASTM D5289 and D6204 at a temperature of 100°C at an amplitude of 0.5 at a frequency of 50 cycles/min.

An "etheric oxygen atom" is one oxygen atom present between carbon atoms.

A "rubber" means a rubber having properties as specified in JIS K6200 (2008) and is distinguished from a "resin".

<Method for producing laminate>

The method for producing a laminate of the present invention is a method for producing a laminate having a first crosslinked layer and a second crosslinked layer, by producing a laminate having a layer of a first composition described hereinafter and a layer of a second composition described hereinafter, and reacting the first composition and the second composition. Here, the first crosslinked layer is a crosslinked layer formed of the first composition, and the second crosslinked layer is a crosslinked layer formed of the second composition.

In the method for producing a laminate of the present invention, the first composition contains a fluorinated polymer which is the after-described copolymer having TFE units and units based on propylene (hereinafter sometimes referred to as copolymer 1) or copolymer having TFE units and units based on a perfluoro(alkyl vinyl ether) (hereinafter sometimes referred to as PAVE) (hereinafter sometimes referred to as copolymer 2), a crosslinking agent and a crosslinking co-agent, and the second composition contains an after-described non-fluorinated polymer and a crosslinking agent and optionally contains a crosslinking co-agent.

Further, the absolute value of the difference between ML of the first composition and ML of the second composition is from 0 to 5.0. ML is the minimum value of the torque when crosslinking test is carried out by a rubber process analyzer (RPA) which is one type of crosslinking property measuring apparatus. ML in this specification is a value measured by using RPA-2000 (manufactured by ALPHA TECHNOLOGIES) as a rubber process analyzer (RPA).

The absolute value of the difference between ML of the first composition and ML of the second composition is at most 5.0, preferably at most 4.5, more preferably at most 4.0.

The minimum value of the absolute value of the difference in ML is 0.

ML can be considered as the viscosity of each of the fluorinated polymer in the first composition and the non-fluorinated polymer in the second composition immediately before start of the crosslinking reaction, in the process of heating the first composition and the second composition. That is, it is considered that when the absolute value of the difference between ML of the first composition and ML of the second composition is from 0 to 5.0, the first composition and the second composition are partly miscible at the interface of the laminate having a layer of the first composition and a layer of the second composition, at the time of start of the crosslinking, and when the laminate is subjected to reaction, the fluorinated polymer in the first composition and the non-fluorinated polymer in the second composition are likely to form a primary bonding, whereby the laminate of the present invention is excellent in interlaminar bonding between the first crosslinked layer and the second crosslinked layer.

As a method of reacting the first composition and the second composition, in addition to a heating method, an ultraviolet irradiation method may, for example, be mentioned. In the case of ultraviolet irradiation, although heat is not directly applied to the first composition and the second composition, it is considered that the crosslinking reaction is an exothermic reaction and thus the temperature of the first composition and the second composition increases, whereby the same tendency as above is displayed.

In the method for producing a laminate of the present invention, ML of the first composition is preferably from 1 to 15. ML of the first composition is more preferably at least 2, further preferably at least 2.5. Further, ML of the first composition is more preferably at most 14, further preferably at most 13.

When ML of the first composition is within the above range, it is considered that the first composition is excellent in processability and is likely to be miscible with the second composition, and the laminate will be more excellent in interlaminar bonding.

In the method for producing a laminate of the present invention, ML of the second composition is preferably from 0.5 to 10. ML of the second composition is more preferably at least 0.7, further preferably at least 1. Further, ML of the second composition is more preferably at most 9, further preferably at most 8.

When ML of the second composition is within the above range, it is considered that the second composition is excellent in processability and is likely to be miscible with the first composition, and the laminate will be more excellent in interlaminar bonding.

As a preferred method for producing a laminate more excellent in interlaminar bonding between the first crosslinked layer and the second crosslinked layer at high temperature, a method of adjusting the degree of crosslinking of the composition may be mentioned.

In the method for producing a laminate of the present invention, the degree of crosslinking of the first composition is preferably from 5 to 150. The degree of crosslinking of the first composition is more preferably at least 10, further preferably at least 20. Further, the degree of crosslinking of the first composition is more preferably at most 100.

Further, the degree of crosslinking of the second composition is preferably from 5 to 300. The degree of crosslinking of the second composition is more preferably at least 10, further preferably at least 30. Further, the degree of crosslinking of the second composition is more preferably at most 210, further preferably at most 170.

The degree of crosslinking is defined by the following formula 3.

$$\text{Degree of crosslinking} = MH - ML \qquad \text{formula 3}$$

wherein MH is the maximum value of the torque, and ML is the minimum value of the torque, as described above, when crosslinking test is conducted using a rubber process analyzer (RPA). The degree of crosslinking described in this specification was measured by using RPA-2000 (manufactured by ALPHA TECHNOLOGIES) as a rubber process analyzer.

The degree of crosslinking is a measure of the crosslinking reaction property of a crosslinkable composition, and a higher degree of crosslinking indicates more crosslinking sites and more excellent crosslinking reaction property. When a composition having a high crosslinking reaction property is laminated, the resulting laminate will be excellent in interlaminar bonding at high temperature.

When the degree of crosslinking of the first composition is at least the above lower limit, due to excellent crosslinking reaction property, a laminate excellent in interlaminar bonding at high temperature can be formed, and when it is at most the above upper limit value, excellent processability will be obtained.

When the degree of crosslinking of the second composition is at least the above lower limit, due to excellent crosslinking reaction property, a laminate excellent in interlaminar bonding at high temperature can be formed, and when it is at most the above upper limit, excellent processability will be obtained.

In the method for producing a laminate of the present invention, the absolute value of the difference between the degree of crosslinking of the first composition and the degree of crosslinking of the second composition is preferably from 0 to 200. It is more preferably at most 150. When the absolute value of the difference between the degree of crosslinking of the first composition and the degree of crosslinking of the second composition is within the above range, it is considered that the fluorinated polymer in the first composition and the non-fluorinated polymer in the second composition are likely to form a primary bonding, and the resulting laminate will be more excellent in interlaminar bonding between the first crosslinked layer and the second crosslinked layer at high temperature.

(First composition)

The first composition contains a fluorinated polymer which is the after-described copolymer 1 or copolymer 2, a crosslinking agent and a crosslinking co-agent. The first composition may contain other component within a range not to impair the effects of the present invention.

The crosslinked product of the first composition is excellent in alkali resistance and steam resistance as compared with a crosslinked product of a copolymer having units based on hexafluoropropylene (hereinafter sometimes referred to as HFP) and units based on vinylidene fluoride (hereinafter sometimes referred to as VdF), that is FKM.

(Copolymer 1)

The copolymer 1 may further contain units based on other monomer as the case requires, within a range not to impair the effects of the present invention.

As other monomer in the copolymer 1, a monomer having two or more polymerizable unsaturated bonds (hereinafter sometimes referred to as DVE), PAVE and a perfluoro(oxaalkyl vinyl ether) (hereinafter sometimes referred to as POAVE) may, for example, be mentioned.

When DVE is copolymerized with TFE and propylene, the copolymer 1 having branched chains is obtained. When the copolymer 1 further has DVE units, it is excellent in crosslinking reaction property, and the resulting crosslinked product is excellent in mechanical properties such as tensile strength and compression set at high temperature and is excellent in rubber property at low temperature (hereinafter sometimes referred to as low temperature property) as well.

As DVE, at least one member selected from the group consisting of compound 4 represented by the following formula 4, compound 5 represented by the following formula 5 and compound 6 represented by the following formula 6 is preferred.

$$CR^1R^2=CR^3\text{-}R^4\text{-}CR^5=CR^6R^7 \qquad \text{formula 4}$$

$$CR^8R^9=CR^{10}\text{-}OCO\text{-}R^{11}\text{-}COO\text{-}CR^{12}=CR^{13}R^{14} \qquad \text{formula 5}$$

$$CR^{15}R^{16}=CR^{17}COOCH=CH_2 \qquad \text{formula 6}$$

In the above formulae, $R^1$, $R^2$, $R^3$, $R^5$, $R^6$, $R^7$, $R^8$, $R^9$, $R^{10}$, $R^{12}$, $R^{13}$, $R^{14}$ and $R^{17}$ are each independently a hydrogen atom, a fluorine atom or a methyl group, $R^4$ and $R^{11}$ are each independently a $C_{1-25}$ alkylene group, a $C_{1-25}$ alkylene group having an etheric oxygen atom, a $C_{1-25}$ fluoroalkylene group, a $C_{1-25}$ fluoroalkylene group having an etheric oxygen atom, or an oxygen atom, and $R^{15}$ and $R^{16}$ are each independently a hydrogen atom, a $C_{1-10}$ alkyl group or a $C_{1-10}$ alkyl group having an etheric oxygen atom.

As the compound 4 having an etheric oxygen atom, divinyl ether, allyl vinyl ether, butenyl vinyl ether, fluoro(divinyl ether), fluoro(allyl vinyl ether) and fluoro(butenyl vinyl ether) may, for example, be mentioned.

The compound 4 is, with a view to increasing crosslinking reaction property and heat resistance, $R^1$, $R^2$, $R^3$, $R^5$, $R^6$ and $R^7$ are preferably each independently a fluorine atom or a hydrogen atom, and it is more preferred that all of $R^1$, $R^2$, $R^3$, $R^5$, $R^6$ and $R^7$ are fluorine atoms.

In a case where $R^4$ is not an oxygen atom, the alkylene group or fluoroalkylene group as $R^4$ may be linear or branched. The alkylene group or fluoroalkylene group as $R^4$ is preferably linear. The number of carbon atoms in $R^4$ is preferably from 2 to 15, more preferably from 2 to 8. The number of carbon atoms in $R^4$ is further preferably at least 3. Further, the number of carbon atoms in $R^4$ is further preferably at most 6, particularly preferably at most 5. The number of the etheric oxygen atom in $R^4$ is preferably from 0 to 4, more preferably from 0 to 3. The number of the etheric oxygen atom in $R^4$ is further preferably at least 1. Further, the number of the etheric oxygen atom in $R^4$ is further preferably at most 2. When $R^4$ has such a preferred embodiment, the resulting crosslinked product of the copolymer 1 will be more excellent in mechanical properties such as tensile strength and compression set at high temperature.

As $R^4$, in view of heat resistance and suppression of polymer coloring, a fluoroalkylene group having an oxygen atom at both terminals or having no oxygen atom is preferred, and as such a fluoroalkylene group, a perfluoroalkylene group is more preferred.

As specific examples of the compound 4, divinyl ethers such as allyl vinyl ether, butenyl vinyl ether and 1,4-butanediol divinyl ether, fluoro(divinyl ethers) such as $CH_2=CH(CF_2)_6CH=CH_2$(hereinafter sometimes referred to as C6DV), $CF_2=CFO(CF_2)_2OCF=CF_2$, $CF_2=CFO(CF_2)_3OCF=CF_2$(hereinafter sometimes referred to as C3DVE), $CF_2=CFO(CF_2)_4OCF=CF_2$(hereinafter sometimes referred to as C4DVE), $CF_2=CFO(CF_2)_6OCF=CF_2$, $CF_2=CFO(CF_2)_8OCF=CF_2$, $CF_2=CFO(CF_2)_2OCF(CF_3)CF_2OCF=CF_2$, $CF_2=CFO(CF_2)_2O(CF(CF_3)CF_2O)_2CF=CF_2$, $CF_2=CFOCF_2O(CF_2CF_2O)_2CF=CF_2$, $CF_2=CFO(CF_2O)_3(CF(CF_3)CF_2O)_2CF=CF_2$, $CF_2=CFOCF_2CF(CF_3)O(CF_2)_2OCF(CF_3)CF_2OCF=CF_2$ and $CF_2=CFOCF_2CF_2O(CF_2O)_2CF_2CF_2OCF=CF_2$, allyl vinyl ether and butenyl vinyl ether may, for example, be mentioned.

Among them, in that the resulting crosslinked product of the copolymer 1 will be more excellent in low temperature property while maintaining mechanical properties, more preferred are C6DV, C3DVE and C4DVE, and further preferred are C3DVE and C4DVE.

As the compound 5, divinyl esters, alkyl vinyl esters, fluoro(divinyl esters) and fluoro(alkyl vinyl esters) may, for example, be mentioned.

In the compound 5, it is preferred that $R^8$, $R^9$, $R^{10}$, $R^{12}$, $R^{13}$ and $R^{14}$ are a hydrogen atom.

As $R^{11}$, the same groups as $R^4$ may, for example, be mentioned. The preferred range of the number of carbon atoms is also the same. The number of the etheric oxygen atom in $R^{11}$ is preferably from 0 to 1, more preferably 0.

As a specific example of a preferred compound 5, divinyl adipate which is a divinyl ester may be mentioned.

As the compound 6, preferred is a compound wherein $R^{16}$ is a hydrogen atom, more preferred is a compound wherein $R^{16}$ and $R^{17}$ are a hydrogen atom.

As specific examples of a preferred compound 6, vinyl crotonate and vinyl methacrylate may be mentioned. The compound 6 is more preferably vinyl crotonate.

DVE may be used alone or in combination of two or more. When the copolymer 1 has DVE units, the proportion of the DVE units is, to all the units constituting the copolymer 1, preferably from 0.01 to 3 mol%. Further, the proportion of the DVE units is, to all the units constituting the copolymer 1, more preferably at most 1 mol%, further preferably at most 0.5 mol%. When the proportion of the DVE units is at least the lower limit of the above range, the resulting crosslinked product of the copolymer 1 will be more excellent in mechanical properties such as tensile strength and compression set at high temperature. When the proportion of the units based on DVE is at most the upper limit of the above range, it is possible to securely prevent or further decrease breakage when a stress such as folding is applied at high temperature while maintaining excellent physical properties of the crosslinked product of the copolymer 1.

As PAVE, compound 7 may, for example, be mentioned.

$$CF_2=CF-O-R^{f1} \qquad \text{formula 7}$$

wherein $R^{f1}$ is a $C_{1-10}$ perfluoroalkyl group.

The perfluoroalkyl group as $R^{f1}$ may be linear or branched. The number of carbon atoms in the perfluoroalkyl group is preferably from 1 to 8. The number of carbon atoms in the perfluoroalkyl group is more preferably at most 6, further preferably at most 5, particularly preferably at most 3.

As specific examples of PAVE, perfluoro(methyl vinyl ether) (hereinafter sometimes referred to as PMVE), perfluoro(ethyl vinyl ether) (hereinafter sometimes referred to as PEVE), and perfluoro(propyl vinyl ether) (hereinafter sometimes referred to as PPVE) may be mentioned. PAVE may be used alone or in combination of two or more. Among them, PMVE is preferred.

When the copolymer 1 has PAVE units, the proportion of the PAVE units is, to all the units constituting the copolymer 1, preferably from 3 to 60 mol%. The proportion of the PAVE units is, to all the units constituting the copolymer 1, more preferably at least 5 mol%, further preferably at least 10 mol%. The proportion of the PAVE units is, to all the units constituting the copolymer 1, more preferably at most 57 mol%, further preferably at most 40 mol%. When the proportion of the PAVE units in the copolymer 1 is within the above range, more excellent chemical resistance (e.g. alkali resistance) will be obtained.

As POAVE, compound 8 represented by the formula 8 may, for example, be mentioned.

$$CF_2=CF-(OCF_2CF_2)_n-(OCF_2)_m-(OC_3F_6)_p-OR^{f2} \qquad \text{formula 8}$$

In the formula, $R^{f2}$ is a $C_{1-4}$ perfluoroalkyl group, n is an integer of from 0 to 3, m is an integer of from 0 to 4, p is an integer of from 0 to 4, and n+m+p is an integer of from 1 to 7.

n, m and p respectively represent the numbers of $(OCF_2CF_2)$, $(OCF_2)$ and $(OC_3F_6)$. Accordingly, the formula 8 does not represent the order of arrangements of $(OCF_2CF_2)_n$, $(OCF_2)_m$ and $(OC_3F_6)_p$, and when n, m and p are respectively 2 or more, $(OCF_2CF_2)_n$, $(OCF_2)_m$ and $(OC_3F_6)_p$ do not necessarily represent block arrangement of $(OCF_2CF_2)$, $(OCF_2)$ and $(OC_3F_6)$. That is, $(OCF_2CF_2)$, $(OCF_2)$ and $(OC_3F_6)$ are arranged in optional order.

The perfluoroalkyl group as $R^{f2}$ may be linear or branched. The number of carbon atoms in $R^{f2}$ is preferably from 1 to 3.

$C_3F_6$ may be linear or branched.

When n is 0, m is preferably 3 or 4.

When n is 1, m is preferably an integer of from 2 to 4.

When n is 2 or 3, m is preferably 0.

n is preferably an integer of from 1 to 3.

When the number of carbon atoms in $R^{f2}$, n and m are within the above ranges, the productivity of the copolymer 1 will improve, and the resulting crosslinked product of the copolymer 1 will be excellent in low temperature property.

As specific examples of the compound 8, the following compounds may be mentioned.

$CF_2=CF-OCF_2CF_2-OCF_2-OCF_2-OCF_2-OCF_2-OCF_3$(hereinafter sometimes referred to as C9PEVE)

$CF_2=CF-OCF_2CF_2-OCF_2-OCF_2-OCF_3$(hereinafter sometimes referred to as C7PEVE)

$CF_2=CF-OCF_2CF_2-OCF_2CF_2-OCF_2CF_3$(hereinafter sometimes referred to as EEAVE)

$CF_2=CF-OCF_2CF_2-OCF_2CF_2-OCF_2CF_2-OCF_2CF_3$(hereinafter sometimes referred to as EEEAVE)

$CF_2=CF-OCF_2-OCF_3$

$CF_2=CF-OCF_2-OCF_2CF3$

$CF_2=CF-OCF_2CF(CF_3)-OCF_2CF(CF_3)-OCF_2CF_2CF_3$

$CF_2=CF-OCF_2-OCF_2-OCF_3$

$CF_2=CF-OCF_2CF_2-OCF_3$

$CF_2=CF-OCF_2CF_2-OCF_2CF_3$

$CF_2=CF-OCF_2CF(CF_3)-OCF_2CF_2CF_3$

As the compound 8, in that the productivity of the copolymer 1 will improve and the resulting crosslinked product of the copolymer 1 will be excellent in low temperature property, preferred are C9PEVE, C7PEVE, EEAVE and EEEAVE.

These compounds may be produced by the method described in WO00/56694 using the corresponding alcohol as a raw material.

Other monomer is not particularly limited so long as it is a compound copolymerizable with TFE and propylene. Specifically, monomers having a fluorine atom, such as HFP, VdF, chlorotrifluoroethylene, vinyl fluoride, pentafluoropropylene, perfluorocyclobutene, and ethylene having a perfluoroalkyl group (such as $CH_2=CHCF_3$, $CH_2=CHCF_2CF_3$, $CH_2=CHCF_2CF_2CF_3$, $CH_2=CHCF_2CF_2CF_2CF_3$, and $CH_2=CHCF_2CF_2CF_2CF_2CF_3$), and monomers having no fluorine atom, such as $\alpha$-olefins such as ethylene, isobutylene and pentene, vinyl ethers such as methyl vinyl ether, ethyl vinyl ether, propyl vinyl ether and butyl vinyl ether, and vinyl esters such as vinyl acetate, vinyl propionate, vinyl butyrate, vinyl caproate and vinyl caprylate, may, for example, be mentioned.

As other monomer, a monomer having an iodine atom may be used. When a monomer having an iodine atom is copolymerized, iodine atoms are introduced to the copolymer 1.

As the monomer having an iodine atom, iodoethylene, 4-iodo-3,3,4,4-tetrafluoro-1-butene, 2-iodo-1,1,2,2-tetrafluoro-1-vinyloxyethane, 2-iodoethyl vinyl ether, allyl iodide, 1,1,2,3,3,3-hexafluoro-2-iodo-1-(perfluorovinyloxy)propane, 3,3,4,5,5,5-hexafluoro-4-iodopentene, iodotrifluoroethylene, and 2-iodoperfluoro(ethyl vinyl ether) may, for example, be mentioned.

Other monomer may be used alone or in combination of two or more.

When the copolymer 1 has units of other monomer, the proportion of the units of other monomer is, to all the units constituting the copolymer 1, preferably from 0.001 to 10 mol%. The proportion of the units of other monomer is, to all the units constituting the copolymer 1, more preferably at least 0.01 mol%. Further, the proportion of the units of other monomer is, to all the units constituting the copolymer 1, more preferably at most 3 mol%, further preferably at most 1 mol%.

The copolymer 1 preferably further has iodine atoms, in that it will be excellent in crosslinking property. The iodine atoms are preferably bonded to at least the terminal of the polymer chain of the copolymer 1, in view of crosslinking reaction property. The terminal of the polymer chain means both the terminal of the main chain and the terminal of the branched chain.

The copolymer 1 having iodine atoms may be produced e.g. by a method of copolymerizing the monomer having an iodine atom as other monomer or a method of using the after-described chain transfer agent having an iodine atom to produce the copolymer 1.

The content of iodine atoms in the copolymer 1 is, to the total mass of the copolymer 1, preferably from 0.01 to 5.0 mass%. The content of iodine atoms in the copolymer 1 is, to the total mass of the copolymer 1, more preferably at least 0.05 mass%. Further, the content of iodine atoms in the copolymer 1 is, to the total mass of the copolymer 1, more preferably at most 2.0 mass%, further preferably at most 1.0 mass%. When the content of iodine atoms is within the above range, the copolymer 1 will be more excellent in crosslinking reaction property, and the resulting crosslinked product will be more excellent in mechanical properties.

The storage shear modulus G' of the copolymer 1 is preferably from 50 kPa to 600 kPa. The storage shear modulus G' of the copolymer 1 is more preferably at least 100 kPa, further preferably at least 200 kPa. The storage shear modulus G' of the copolymer 1 is more preferably at most 500 kPa, further preferably at most 400 kPa. A higher storage shear modulus G' means a higher molecular weight of the polymer and a higher density of entanglement of the molecular chain. When the storage shear modulus G' of the copolymer 1 is within the above range, the crosslinked product of the copolymer 1 will be more excellent in mechanical properties such as tensile strength.

As the copolymer 1, preferred are copolymers of the following X1 to X8. Such copolymers may be used alone or in combination of two or more.

In that the crosslinked product of the copolymer 1 will be more excellent in mechanical properties, heat resistance, chemical resistance (e.g. alkali resistance), oil resistance and weather resistance, X1, X2, X4, X5, X6 or X8 is more preferred, X1, X5 or X8 is further preferred, and X1 or X5 is particularly preferred.

X1: a combination of TFE units and propylene units (hereinafter sometimes referred to as P units).
X2: a combination of TFE units, P units and VdF units.
X3: a combination of TFE units, P units and PPVE units.
X4: a combination of TFE units, P units and PMVE units.
X5: a combination of TFE units, P units and compound 4 units.
X6: a combination of TFE units, P units, compound 4 units and VdF units.
X7: a combination of TFE units, P units, compound 4 units and PPVE units.
X8: a combination of TFE units, P units, compound 4 units and PMVE units.

The molar ratios or the proportions of the respective units constituting the copolymers X1 to X8 are preferably within the following ranges. When the proportions of the units constituting the copolymers X1 to X8 are within the following ranges, the resulting crosslinked product of the copolymer 1 will be more excellent in mechanical properties, heat resistance, chemical resistance (e.g. alkali resistance), oil resistance and weather resistance.

X1: To all the units constituting X1, the proportion of the TFE units is from 30 to 99 mol%, and the proportion of the P units is from 1 to 70 mol%. More preferably, to all the units constituting X1, the proportion of the TFE units is from 30 to 70 mol%, and the proportion of the P units is from 30 to 70 mol%. Further preferably, to all the units constituting X1, the proportion of the TFE units is from 40 to 60 mol%, and the proportion of the P units is from 40 to 60 mol%.
X2: To all the units constituting X2, the proportion of the TFE units is from 40 to 59 mol%, the proportion of the P units is from 40 to 59 mol%, and the proportion of the VdF units is from 1 to 10 mol%.

X3: To all the units constituting X3, the proportion of the TFE units is from 30 to 60 mol%, the proportion of the P units is from 10 to 40 mol%, and the proportion of the PPVE units is from 10 to 40 mol%.

X4: To all the units constituting X4, the proportion of the TFE units is from 30 to 60 mol%, the proportion of the P units is from 10 to 40 mol%, and the proportion of the PMVE units is from 10 to 40 mol%.

X5: To all the units constituting X5, the proportion of the TFE units is from 40 to 59.99 mol%, the proportion of the P units is from 40 to 59.99 mol%, and the proportion of the compound 4 units is from 0.01 to 3 mol%.

X6: To all the units constituting X6, the proportion of the TFE units is from 40 to 58.99 mol%, the proportion of the P units is from 40 to 58.99 mol%, the proportion of the compound 4 units is from 0.01 to 3 mol%, and the proportion of the VdF units is from 1 to 10 mol%.

X7: To all the units constituting X7, the proportion of the TFE units is from 30 to 60 mol%, the proportion of the P units is from 10 to 40 mol%, the proportion of the compound 4 units is from 0.01 to 3 mol%, and the proportion of the PPVE units is from 10 to 40 mol%.

X8: To all the units constituting X8, the proportion of the TFE units is from 30 to 60 mol%, the proportion of the P units is from 10 to 40 mol%, the proportion of the compound 4 units is from 0.01 to 3 mol%, and the proportion of the PMVE units is from 10 to 40 mol%.

When the copolymer 1 is a bipolymer consisting of TFE units and P units, the molar ratio of the TFE units to the P units [TFE units/P units] is preferably from 30/70 to 99/1, more preferably from 30/70 to 70/30, further preferably from 40/60 to 60/40. When the molar ratio of the TFE units to the P units is within the above range, the resulting crosslinked product will be more excellent in mechanical properties, heat resistance, chemical resistance (e.g. alkali resistance), oil resistance and weather resistance.

The total proportion of the TFE units and the P units is, to all the units constituting the copolymer 1, preferably at least 90 mol%, more preferably at least 95 mol%, further preferably at least 99 mol%. When the total proportion of the TFE units and the P units to all the units constituting the copolymer 1 is within the above range, the resulting crosslinked product will be more excellent in mechanical properties, heat resistance, chemical resistance (e.g. alkali resistance), oil resistance and weather resistance.

(Copolymer 2)

The copolymer 2 is a copolymer having TFE units and PAVE units.

As the PAVE units in the copolymer 2, the above described compound 7 units are preferred.

The perfluoroalkyl group as $R^{f1}$ in the compound 7 may be linear or branched. The number of carbon atoms in $R^{f1}$ is, with a view to improving the productivity of the copolymer 2, preferably from 1 to 5, more preferably from 1 to 3.

As specific examples of a preferred compound 7, PMVE, PEVE, PPVE and $CF_2=CF-O-CF_2CF_2CF_2CF_3$ may be mentioned.

As the compound 7, with a view to improving the productivity of the copolymer 2, PMVE, PEVE and PPVE are preferred.

The copolymer 2 preferably has at least one of the POAVE units and the DVE units.

As POAVE, the above-described compound 8 may, for example, be mentioned.

Preferred embodiment of $R^{f2}$ and preferred ranges of n and m of the compound 8 in the copolymer 2 are the same as those of the compound 8 represented by the formula 8 in the copolymer 1.

When the number of carbon atoms in $R^{f2}$, n and m are within the above preferred ranges, the productivity of the copolymer 2 will improve, and the resulting crosslinked product of the copolymer 2 will be excellent in low temperature property.

As specific examples of the compound 8 in the copolymer 2, the same compounds as the compound 8 represented by the formula 8 in the copolymer 1 may be mentioned.

As the compound 8, in that the productivity of the copolymer 2 will improve and the resulting crosslinked product of the copolymer 2 will be excellent in low temperature property, C9PEVE, C7PEVE, EEAVE and EEEAVE are preferred.

These compounds may be produced by the method described in WO00/56694 using the corresponding alcohol as a raw material.

When the copolymer 2 has DVE units, the resulting crosslinked product will be excellent in mechanical properties such as tensile strength and compression set at high temperature and also in low temperature property.

The polymerizable unsaturated bond may, for example, be a double bond or a triple bond between carbon atoms, and is preferably a double bond. The number of the polymerizable unsaturated bond is preferably from 2 to 6, more preferably 2 or 3, particularly preferably 2.

DVE is preferably a perfluoro compound.

As DVE, preferred is at least one member selected from the group consisting of the compound 4, the compound 5 and the compound 6 in the copolymer 1.

The copolymer 2 may further have units based on other monomer as the case requires within a range not to impair the effects of the present invention.

As other monomer in the copolymer 2, a monomer having a fluorine atom and a halogen atom other than a fluorine atom (such as bromotrifluoroethylene or iodotrifluoroethylene), or a monomer having a fluorine atom and a nitrile group (such as $CF_2=CFO(CF_2)_5CN$, or perfluoro(8-cyano-5-methyl-3,6-dioxa-1-octene)) may, for example, be mentioned.

The proportion of the TFE units in the copolymer 2 is, to all the units constituting the copolymer 2, preferably from 35 to 75 mol%. The proportion of the TFE units is, to all the units constituting the copolymer 2, more preferably at least 40 mol%, further preferably at least 50 mol%.

The proportion of the PAVE units in the copolymer 2 is, to all the units constituting the copolymer 2, preferably from 25 to 65 mol%. The proportion of the PAVE units is, to all the units constituting the copolymer 2, more preferably at most 60 mol%, further preferably at most 57 mol%, most preferably at most 40 mol%.

The proportion of the POAVE units in the copolymer 2 is, to all the units constituting the copolymer 2, preferably from 3 to 57 mol%. The proportion of the POAVE units is, to all the units constituting the copolymer 2, more preferably at least 5 mol%, further preferably at least 8 mol%. Further, the proportion of the POAVE units is, to all the units constituting the copolymer 2, more preferably at most 40 mol%, further preferably at most 30 mol%.

The proportion of the DVE units in the copolymer 2 is, to all the units constituting the copolymer 2, preferably from 0.01 to 1 mol%. The proportion of the DVE units is, to all the units constituting the copolymer 2, more preferably at least 0.05 mol%. Further, the proportion of the DVE units is, to all the units constituting the copolymer 2, more preferably at most 0.5 mol%, further preferably at most 0.3 mol%.

The proportion of the units based on other monomer in the copolymer 2 is, to all the units constituting the copolymer 2, preferably from 0 to 5 mol%. The proportion of the units based on other monomer is, to all the units constituting the copolymer 2, more preferably at most 3 mol%, further preferably at most 2 mol%.

When the proportions of the TFE units, the PAVE units, the POAVE units, the DVE units and the units of other monomer in the copolymer 2 are within the above ranges, the resulting crosslinked product of the copolymer 2 will be more excellent in low temperature property and alkali resistance while maintaining rubber physical properties, and the laminate will be more excellent in interlaminar bonding between the first crosslinked layer and the second crosslinked layer at high temperature.

The copolymer 2 preferably further contains iodine atoms, whereby it will be more excellent in crosslinking property. The iodine atoms are preferably bonded to the terminal of the polymer chain of the copolymer 2. The terminal of the polymer chain means both the terminal of the main chain and the terminal of the branched chain.

The content of the iodine atoms is, to the copolymer 2, preferably from 0.01 to 1.5 mass%, more preferably from 0.01 to 1.0 mass%. When the content of the iodine atoms is within the above range, the copolymer 2 will be more excellent in crosslinking property.

The storage shear modulus G' of the copolymer 2 is preferably from 100 kPa to 600 kPa. The storage shear modulus G' of the copolymer 2 is more preferably at least 200 kPa. Further, the storage shear modulus G' of the copolymer 2 is more preferably at most 500 kPa, further preferably at most 400 kPa. When the storage shear modulus G' of the copolymer 2 is within the above range, the resulting crosslinked product of the copolymer 2 will be more excellent in mechanical properties such as tensile strength.

(Method for producing copolymer)

The copolymer 1 may be produced, for example, by polymerizing a monomer component containing TFE and propylene in the presence of a radical polymerization initiator. The monomer component to produce the copolymer 1 may contains, as the case requires, at least one member selected from the group consisting of PAVE, DVE and other monomer in the copolymer 1. The copolymer 1 may be produced, for example, by the method described in WO2009/119202, WO2010/053056, etc.

The copolymer 2 may be produced, for example, by polymerizing a monomer component containing TFE and PAVE in the presence of a radical polymerization initiator. The monomer component to produce the copolymer 2 may contain, as the case requires, POAVE, DVE and other monomer in the copolymer 2. The copolymer 2 may be produced, for example, by the method described in WO2010/082633, etc.

(Component contained in first composition)

The first composition contains, in addition to the fluorinated polymer, as additives, a crosslinking agent and a crosslinking co-agent. The first composition preferably further contains an antioxidant. The first composition may also contain a polymer other than the fluorinated polymer in the present invention or a component other than the additives.

The crosslinking agent may, for example, be an organic peroxide, a polyol, a polyamine, triazine, imidazole, aniline or an ammonium salt. Among them, in view of excellent productivity, heat resistance and chemical resistance, preferred is an organic peroxide.

The organic peroxide may, for example, be dibenzoyl peroxide, bis($\alpha,\alpha$-dimethylbenzyl) peroxide, di(tert-butyl) peroxide, tert-butylperoxyacetate, tert-butylperoxy isopropyl carbonate, tert-butylperoxybenzoate, 2,5-dimethyl-2,5-bis(tert-butylperoxy)hexane, 2,5-dimethyl-2,5-bis(tert-butylperoxy)hexyne-3, $\alpha,\alpha'$-bis(tert-butylperoxy)-p-diisopropylbenzene or 2,5-dimethyl-2,5-bis(benzoylperoxy)hexane. They may be used alone or in combination of two or more.

The content of the crosslinking agent in the first composition is, per 100 parts by mass of the copolymer 1 or the copolymer 2, preferably from 0.01 to 10 parts by mass. The content of the crosslinking agent in the first composition is, per 100 parts by mass of the copolymer 1 or the copolymer 2, more preferably at least 0.1 parts by mass. Further, the content of the crosslinking agent is, per 100 parts by mass of the copolymer 1 or the copolymer 2, more preferably at most 7 parts by mass, further preferably at most 5 parts by mass. When the content of the organic peroxide is within the above range, the resulting laminate will be more excellent in interlaminar bonding between the first crosslinked layer and the second crosslinked layer at high temperature.

The crosslinking co-agent may, for example, be a compound having two or more unsaturated bonds in one molecule. As specific examples of the crosslinking co-agent, triallyl cyanurate, triallyl isocyanurate, bismaleimide, ethylene glycol dimethacrylate, 1,4-butanediol dimethacrylate, trimethylolpropane trimethacrylate and divinylbenzene may be mentioned. Among them, triallyl cyanurate and triallyl isocyanurate are preferred.

The content of the crosslinking co-agent in the first composition is, per 100 parts by mass of the copolymer 1 or the copolymer 2, preferably from 0.1 to 10 parts by mass. The content of the crosslinking co-agent is, per 100 parts by mass of the copolymer 1 or the copolymer 2, more preferably at least 0.5 parts by mass. Further, the content of the crosslinking co-agent is, per 100 parts by mass of the copolymer 1 or the copolymer 2, more preferably at most 7 parts by mass. When the content of the crosslinking co-agent is within the above range, the crosslinked product of the copolymer 1 or the copolymer 2 will be excellent in physical properties such as hardness and heat resistance.

In the method for producing a laminate of the present invention, it is preferred that at least one of the first composition and the after-described second composition contains an antioxidant, whereby a laminate of which tensile strength, elongation at break, etc., as rubber physical properties of the fluororubber are practically sufficiently maintained, can readily be produced.

As the antioxidant, a compound having a phenolic hydroxy group is preferred.

The compound having a phenolic hydroxy group may, for example, be bisphenol A, bisphenol AF, phenol, cresol, p-phenylphenol, m-phenylphenol, o-phenylphenol, allylphenol, p-hydroxybenzoic acid or ethyl p-hydroxybenzoate. Among them, o-phenylphenol is more preferred.

In a case where the first composition contains the antioxidant, the content of the antioxidant is, per 100 parts by mass of the copolymer 1 or the copolymer 2, preferably from 0.01 to 5 parts by mass. The content of the antioxidant per 100 parts by mass of the copolymer 1 or the copolymer 2 is more preferably at most 3 parts by mass, further preferably at most 2 parts by mass.

In the present invention, it is also preferred to incorporate a nitrogen-containing compound such as an amine or an imine as the processing aid to the first composition. By incorporating a nitrogen-containing compound to the first composition, interlaminar bonding between the first crosslinked layer and the second crosslinked layer at high temperature can further be improved.

As specific examples of the nitrogen-containing compound, 1,8-diazabicyclo[5.4.0]undecene-7, 1,5-diazabicyclo[4.3.0]nonene-5, 1,4-diazabicyclo[2.2.2]octane, triethylamine, tributylamine, diphenylamine, piperidine, morpholine, pyridine, benzotriazole and p-dimethylaminopyridine may be mentioned.

The amount of the nitrogen-containing compound blended in the first composition is, per 100 parts by mass of the copolymer 1, preferably from 0.01 to 2 parts by mass. The amount of the nitrogen-containing compound blended per 100 parts by mass of the copolymer 1 is more preferably at least 0.05 parts by mass. Further, the amount of the nitrogen-containing compound blended per 100 parts by mass of the copolymer 1 is more preferably at most 1.0 parts by mass.

As other component, a fluorinated polymer other than the copolymer 1 and the copolymer 2 (hereinafter sometimes referred to as other fluorinated polymer), and additives other than the above may, for example, be mentioned.

As other fluorinated polymer, a copolymer having HFP units and VdF units and having no P units, and a copolymer having HFP units, VdF units and TFE units and having no P units may, for example, be mentioned.

When the first composition contains other fluorinated polymer, the content of other fluorinated polymer is, per 100 parts by mass of the fluorinated polymer of the present invention, preferably at most 50 parts by mass.

Further, the first composition may contain a non-fluorinated polymer in a small amount relative to the fluorinated polymer. The non-fluorinated polymer may be the non-fluorinated polymer contained in the second composition. When the first composition contains the non-fluorinated polymer in a small amount, it is considered that affinity at the interface between the layer of the first composition and the layer of the second composition improves, and crosslinking reaction at the interface between the layer of the first composition and the layer of the second composition is likely to proceed.

When the first composition contains the non-fluorinated polymer, the content of the non-fluorinated polymer to the total amount of the fluorinated polymer and the non-fluorinated polymer in the first composition is preferably at most 30 mass%, more preferably at most 15 mass%.

As additives other than the above, a filler, a processing aid, a dispersion aid, a plasticizer, a softening agent, an age resister, a bonding aid and a crosslinking promoter may, for example, be mentioned.

As the filler, carbon black, silica, quartz powder, diatomaceous earth, zinc oxide, basic magnesium carbonate, activated calcium carbonate, magnesium silicate, aluminum silicate, titanium dioxide, talc, mica powder, aluminum sulfate, calcium sulfate, barium sulfate, asbestos, graphite, Wollastonite, molybdenum disulfide, carbon fibers, aramid fibers, whiskers, and grass fibers may, for example, be mentioned.

As the processing aid, fatty acid derivatives such as sodium stearate, amide stearate, calcium stearate, and oleic acid glyceride, stearic acid, phosphoric acid derivatives, natural wax and synthetic wax may, for example, be mentioned.

As the processing aid, a higher fatty acid and its metal amine salt may, for example, be mentioned.

As the plasticizer, a phthalic acid derivative, an adipic acid derivative and a sebacic acid derivative may, for example, be mentioned.

As the softening agent, a lubricant oil, a process oil, coal tar and castor oil may, for example, be mentioned.

As the age resister, phenylenediamine, hindered amine, a phosphate, quinoline, cresol and a dithiocarbamate metal salt may, for example, be mentioned.

As the bonding aid, a silane coupling agent and a titanate coupling agent may, for example, be mentioned.

As the crosslinking promotor, bivalent metal oxides such as magnesium oxide, calcium oxide, zinc oxide and lead oxide, and a compound having a guanidine structure may, for example, be mentioned. In addition, a coloring agent, an ultraviolet absorber, a flame retardant, an oil resistance-improving agent, a foaming agent, a scorch retarder, a tackifier, and a lubricant may, for example, be blended as the case requires.

When the first composition contains the copolymer 2 and further contains a metal oxide, the crosslinking reaction will quickly and securely proceed.

The metal oxide is preferably a monovalent or bivalent metal oxide.

As specific examples of the monovalent or bivalent metal oxide, zinc oxide, magnesium oxide, sodium oxide, calcium oxide, barium oxide, lead oxide and copper oxide may, for example, be mentioned.

The content of the metal oxide is, per 100 parts by mass of the copolymer 2, preferably from 0.1 to 10 parts by mass. The content of the metal oxide is, per 100 parts by mass of the copolymer 2, more preferably at least 0.5 parts by mass. The content of the metal oxide is, per 100 parts by mass of the copolymer 2, more preferably at most 6 parts by mass. When the content of the metal oxide is within the above range, the resulting crosslinked product of the first composition will be excellent in hardness.

The first composition may be prepared by mixing the copolymer 1 or the copolymer 2, the crosslinking agent and the crosslinking co-agent, and as the case requires, other component, by kneading method using a kneading apparatus such as a roller, a kneader, a Banbury mixer or an extruder.

(Second composition)

The second composition contains the non-fluorinated polymer and a crosslinking agent as an additive, and optionally contains a crosslinking co-agent. The second composition may contain other additives within a range not to impair the effects of the present invention.

The non-fluorinated polymer is not particularly limited so long as it is a polymer to be a raw material of a crosslinked rubber containing no fluorine atom (non-fluororubber). The non-fluorinated polymer is preferably crosslinkable by an organic peroxide. The Mooney viscosity of the non-fluorinated polymer is preferably from 5 to 120. The Mooney viscosity of the non-fluorinated polymer contained in the second composition is more preferably at least 10, further preferably at least 20. The Mooney viscosity of the non-fluorinated polymer contained in the second composition is more preferably at most 110, further preferably at most 70.

As the non-fluororubber, a rubber containing no fluorine atom as described in JIS K6297:2005 may, for example, be mentioned. Specifically, acrylic rubber (ACM), ethylene acrylic rubber (AEM), ethylene propylene diene rubber (EPDM), silicone rubber, ethylene propylene rubber (EPM), ethylene/vinyl acetate rubber (EVM), chloroprene rubber (CR), butyl rubber (IIR), isoprene rubber (IR), butadiene rubber (BR), chlorinated polyethylene rubber (CM), chlorosulfonated polyethylene rubber (CSM) and chlorinated polyethylene rubber (CPE) may, for example, be mentioned. As the silicone rubber, dimethyl silicone rubber (MQ), methyl vinyl silicone rubber (VMQ), and methyl phenyl silicone rubber (PMQ) may, for example, be mentioned. They may be used alone or in combination of two or more.

As a commercial polymer to be a raw material of ACM, Nipol (registered trademark) AR31 (manufactured by Zeon Corporation) may, for example, be mentioned.

As a commercial polymer to be a raw material of AEM, VAMAC (registered trademark) DP and VAMAC (registered trademark) G (manufactured by Chemours) may, for example, be mentioned.

As a commercial polymer to be a raw material of EVM, DENKA ER (registered trademark) 5300 and DENKA ER (registered trademark) 8401 (manufactured by Denka Company Limited) may, for example, be mentioned.

As a commercial polymer to be a raw material of EPDM, Esprene (registered trademark) EPDM, etc. (manufactured by SUMITOMO CHEMICAL COMPANY, LIMITED) may, for example, be mentioned.

As a commercial polymer to be a raw material of silicone rubber, KE971TU (manufactured by Shin-Etsu Silicone) and KE951U (manufactured by Shin-Etsu Silicone) may, for example, be mentioned.

As the crosslinking agent in the second composition, the same crosslinking agents as the crosslinking agent in the first composition may, for example, be mentioned.

The content of the crosslinking agent in the second composition is, per 100 parts by mass of the non-fluorinated polymer, preferably from 0.01 to 10 parts by mass. The content of the crosslinking agent per 100 parts by mass of the non-fluorinated polymer is more preferably at least 0.1 parts by mass. The content of the crosslinking agent per 100 parts by mass of the non-fluorinated polymer is more preferably at most 6 parts by mass. When the content of the crosslinking agent is within the above range, the resulting laminate will be more excellent in interlaminar bonding between the first crosslinked layer and the second crosslinked layer at high temperature.

In a case where the second composition contains a crosslinking co-agent, as the crosslinking co-agent in the second composition, the same crosslinking co-agents as the crosslinking co-agent in the first composition may, for example, be mentioned.

When the second composition contains the crosslinking co-agent, the content of the crosslinking co-agent in the second composition is, per 100 parts by mass of the non-fluorinated polymer, preferably from 0.1 to 20 parts by mass. The content of the crosslinking co-agent in the second composition per 100 parts by mass of the non-fluorinated polymer is more preferably at least 0.5 parts by mass, further preferably at least 1 parts by mass. The content of the crosslinking co-agent in the second composition per 100 parts by mass of the non-fluorinated polymer is more preferably at most 10 parts by mass. When the content of the crosslinking co-agent is within the above range, the resulting laminate will be more excellent in interlaminar bonding between the first crosslinked layer and the second crosslinked layer at high temperature.

As mentioned above, the second composition preferably contains, in the same manner as the first composition, an antioxidant. As the antioxidant contained in the second composition, the same antioxidants as the antioxidant in the first composition may, for example, be mentioned. The antioxidant contained in the second composition may be the same as the antioxidant contained in the first composition or may be different antioxidant.

When the second composition contains the antioxidant, the content of the antioxidant is, per 100 parts by mass of the after-described non-fluorinated polymer, preferably from 0.01 to 5 parts by mass. The content of the antioxidant per 100 parts by mass of the non-fluorinated polymer is more preferably at most 3 parts by mass, further preferably at most 2 parts by mass.

In the present invention, it is also preferred to incorporate a nitrogen-containing compound such as an amine or an imine as the processing aid to the second composition. By incorporating a nitrogen-containing compound to the second composition, interlaminar bonding between the first crosslinked layer and the second crosslinked layer at high temperature can further be improved. As the nitrogen-containing compound, the same nitrogen-containing compounds as the nitrogen-containing compound in the first composition may, for example, be mentioned.

The amount of the nitrogen-containing compound blended in the second composition is, per 100 parts by mass of the non-fluorinated polymer, preferably from 0.01 to 2 parts by mass, more preferably from 0.01 to 2.0 parts by mass. The amount of the nitrogen-containing compound blended per 100 parts by mass of the copolymer 2 is more preferably at least 0.05 parts by mass. Further, the amount of the nitrogen-containing compound blended per 100 parts by mass of the copolymer 2 is more preferably at most 1 parts by mass.

As other additives in the second composition, the same additives as the additives in the first composition may, for example, be mentioned.

Further, the second composition may contain a fluorinated polymer in a small amount relative to the non-fluorinated polymer. The fluorinated polymer is not limited to the copolymer 1 or the copolymer 2 contained in the first composition, and may be other fluorinated polymer. It is considered that when the second composition contains a fluorinated polymer in a small amount, affinity at the interface between the layer of the first composition and the layer of the second composition will improve and in addition, the crosslinking reaction at the interface between the layer of the first composition and the layer of the second composition is likely to proceed.

When the second composition contains the fluorinated polymer, the content of the fluorinated polymer to the total amount of the non-fluorinated polymer and the fluorinated polymer in the second composition is preferably at most 30 mass%, more preferably at most 15 mass%.

The second composition may be prepared by mixing the non-fluorinated polymer and the crosslinking agent, and as the case requires, the crosslinking co-agent and the additives, by kneading method using the same kneading apparatus as for the first composition.

(Lamination method)

The method of laminating the layer of the first composition and the layer of the second composition is not particularly limited.

In the method for producing a laminate of the present invention, it is preferred that the layer of the first composition and the layer of the second composition are laminated in a non-crosslinked state to form a non-crosslinked laminate, and crosslinking is conducted to form a crosslinked structure in each of the layer of the first composition and the layer of the second composition and at the same time, to form a crosslinked structure between the layer of the first composition and the layer of the second composition, that is co-crosslinking is conducted. By co-crosslinking, the laminate obtained by the method for producing a laminate of the present invention will be more excellent in interlaminar bonding between the first crosslinked layer and the second crosslinked layer at high temperature.

At the time of co-crosslinking, it is preferred to incorporate an organic peroxide as the crosslinking agent for the first composition and as the crosslinking agent for the second composition, whereby the laminate obtained by the method for producing a laminate of the present invention will be more excellent in interlaminar bonding between the first crosslinked layer and the second crosslinked layer at high temperature.

When sulfur is used as the crosslinking agent, co-crosslinking may also be referred to as co-vulcanization.

As a method of reacting the first composition and the second composition in the non-crosslinked laminate, as described above, a heating method or an ultraviolet irradiation method may, for example, be mentioned. As the method of reacting the first composition and the second composition, a heating method is preferred. As specific examples of the heating method, hot press crosslinking, steam crosslinking or hot air crosslinking may, for example, be mentioned.

For example, a method may be employed in which the laminate is heated at from 100 to 400°C for several seconds to 24 hours to conduct primary crosslinking, and then heated at from 100 to 300°C for 30 minutes to 48 hours to conduct secondary crosslinking. Although secondary crosslinking is not essential, by secondary crosslinking, mechanical properties, compression set and other properties of the crosslinked product will further be stabilized or improved.

As a specific method for producing a laminate of the present invention, a method of co-extruding the first composition and the second composition to obtain a non-crosslinked laminate, and subjecting the non-crosslinked laminate to reaction, a method of forming the first composition and the second composition respectively into sheets, and bonding the sheet of the first composition and the sheet of the second composition by hot pressing, or a method by injection molding of injecting the first composition and the second composition into a mold or the like, may, for example, be mentioned.

In the method for producing a laminate of the present invention, the first crosslinked layer and the second crosslinked layer are preferably in direct contact with each other. However, an adhesive may be applied between the layers so as to improve adhesion within a range not to impair co-crosslinking between the first composition and the second composition, or an adhesive thin layer me be interposed between the layers. As the adhesive, a silane coupling agent is preferred, and as specific examples, vinyltriethoxysilane, vinyl tris(2-methoxyethoxy)silane, 3-aminopropyltriethoxysilane and 3-glycidoxypropyltriethoxysilane may, for example, be mentioned.

(Mechanism of action)

According to the above-described method for producing a laminate of the present invention, since the first composition contains the copolymer having TFE units and P units or the copolymer having TFE units and the PAVE units, a laminate excellent in alkali resistance can be produced. Since the absolute value of the difference between ML of the first composition and ML of the second composition is from 0 to 5.0, a laminate excellent in interlaminar bonding at high temperature can be produced.

<Application>

The laminate of the present invention is free from peeling at high temperature and is thereby suitable as a member to be used at high temperature.

The laminate of the present invention is suitable, for example, for a hose. The hose comprising the laminate of the present invention (hereinafter sometimes referred to as laminated rubber hose) may have a layer other than the first crosslinked layer and the second crosslinked layer. In this specification, a hose and a tube are not distinguished and will generally be referred to as "hose".

By the innermost layer of the laminated rubber hose consisting of the first crosslinked layer, the laminated rubber hose has an inner layer having heat resistance, chemical resistance, oil resistance, weather resistance, alkali resistance and steam resistance. Further, by the outermost layer consisting of the first crosslinked layer, the laminated rubber hose has an outer layer having heat resistance, chemical resistance, oil resistance, weather resistance, alkali resistance and steam resistance.

As the application of the laminated rubber hose, rubber hoses for a transport such as an automobile, shipping and an aircraft, for a liquid crystal device, for a semiconductor device, for a food production apparatus, for analytical instrument, for chemical plant instrument and for atomic power plant instrument may, for example, be mentioned.

As specific examples, a hose for a turbo charger, a PCV hose, an oil return hose, an exhaust gas hose, an EGR hose, an oil hose, a sterilizing hose, a pasteurizing hose, a fuel hose, an oil resistant rubber hose, a combustion gas resistant rubber hose, a brake oil resistant rubber hose, a chemical resistant rubber hose, a flon resistant rubber hose, a heat resistant air rubber hose, a rubber hose for a gas heat pump, a hydraulic brake hose, an engine oil hose, a radiator hose, a vacuum hose, an evaporator hose, an ATF hose, a water piping hose and a steam piping hose may, for example, be mentioned.

Further, the laminated rubber hose is excellent also in resistance to liquids, particularly oil and coolant (LLC) and is thereby suitable for e.g. oil piping and coolant piping.

Further, the laminated rubber hose is excellent also in resistance to a strongly basic compound and is thereby used for a urea SCR system which employs an aqueous urea solution such as Adblue (registered trademark) which is strongly basic.

The method for producing the laminated rubber hose is not particularly limited. For example, the first composition and the second composition are co-extruded into a tube to obtain a non-crosslinked laminate, and the first composition and the second composition are reacted to obtain a laminated rubber hose.

Otherwise, the first composition or the second composition is extruded into a tube, and then the second composition or the first composition is extruded on the surface of the tube to obtain a non-crosslinked laminate, which is reacted to obtain a laminated rubber hose having an inner layer consisting of the first crosslinked layer or the second crosslinked layer and an outer layer consisting of the second crosslinked layer or the first crosslinked layer.

As the laminated rubber hose, in addition to the two layered rubber hose having an inner layer consisting of the first crosslinked layer or the second crosslinked layer and an outer layer consisting of the second crosslinked layer or the first crosslinked layer, a multi-layered rubber hose having, in addition to the inner layer and the outer layer, a layer consisting of the first crosslinked layer or the second crosslinked layer, and a three-layered rubber hose having a reinforcing fiber layer on the surface of the outer layer, may be mentioned. Further, within a range not to impair the co-crosslinking of the first composition and the second composition, the laminate may have an adhesive thin layer of e.g. an adhesive, a layer comprising a thermoplastic resin, or a metal thin film, between the first crosslinked layer and the second crosslinked layer. The reinforcing fiber for the laminated rubber hose may, for example be p-aramid fibers or m-aramid fibers. As commercial products, Technora (manufactured by TEIJIN LIMITED), Nomex (manufactured by Chemours) may, for example, be mentioned.

In the laminate of the present invention, the thicknesses of the first crosslinked layer formed of the first composition and the second crosslinked layer formed of the crosslinked product of the second composition are not particularly limited.

For example, when the laminate of the present invention is used as a laminated rubber hose for an automobile, the thickness of the first crosslinked layer is preferably from 0.1 to 100 mm, more preferably from 0.15 to 50 mm, particularly preferably from 0.2 to 30 mm. The thickness of the second crosslinked layer is preferably from 0.1 to 100 mm, more preferably from 0.15 to 50 mm, particularly preferably from 0.2 to 30 mm.

For example, when the laminate of the present invention is used as a laminated rubber hose for a plant, the thickness of the first crosslinked layer is preferably from 0.2 to 200 mm, more preferably from 0.2 to 100 mm, particularly preferably from 0.2 to 20 mm. The thickness of the second crosslinked layer is preferably from 0.2 to 200 mm, more preferably from 0.2 to 100 mm, particularly preferably from 0.2 to 50 mm.

The laminate of the present invention may be used, for example, as a rubber roll.

As the application of a rubber roll, for example, a rubber roll for a film, a rubber roll for paper industry, a rubber roll for plywood and a rubber roll for steel may, for example, be mentioned.

When the laminate of the present invention is used as a laminated rubber roll for industry, the thickness of the first crosslinked layer is preferably from 0.1 to 20,000 mm, more preferably from 0.15 to 10,000 mm, particularly preferably from 0.2 to 1,000 mm. The thickness of the second crosslinked layer is preferably from 0.1 to 20,000 mm, more preferably from 0.15 to 10,000 mm, particularly preferably from 0.1 to 1,000 mm.

The proportion of the thickness of the first crosslinked layer to the total thickness of the first crosslinked layer and the second crosslinked layer in the laminate of the present invention, is preferably from 10 to 90%, more preferably from 25 to 75%.

The laminate of the present invention may be used, for example, as a sealing material.

As the sealing material, for example, an O ring, a V ring, a gasket and a packing may, for example, be mentioned.

For example, when the laminate of the present invention is used as a sealing material, the thickness of the first crosslinked layer is preferably from 0.1 to 100 mm, more preferably from 0.15 to 50 mm, particularly preferably from 0.2 to 30 mm. The thickness of the second crosslinked layer is preferably from 0.1 to 100 mm, more preferably from 0.15 to 50 mm, particularly preferably from 0.2 to 30 mm.

The laminate of the present invention may be used, for example, as a wire covering material.

In a covered wire of the present invention, the wire covering material to be formed on an outer periphery of a core wire may be not only one formed to be directly in contact with the core wire but also one formed on the outer periphery indirectly via other layer on the core wire. Specifically, the covered wire of the present invention includes not only an insulating wire comprising a conductor or a core wire as a conductor directly covered with the laminate of the present invention as the wire covering material but also a wire comprising as the outer layer the laminate of the present invention as the wire covering material, for example, a cable and a wire harness having a sheath. The cable may, for example, be a sensor cable or a power cable.

The conductor is not particularly limited and may, for example, be copper, a copper alloy, aluminum or aluminum alloy, a plated wire with e.g. tin, silver or nickel, a stranded wire, a superconductor, or a semiconductor device plated lead wire.

When the laminate of the present invention is used as a wire covering material, the thickness of the first crosslinked layer is preferably from 0.1 to 10 mm, more preferably from 0.15 to 5 mm, particularly preferably from 0.2 to 3 mm. The thickness of the second crosslinked layer is preferably from 0.1 to 10 mm, more preferably from 0.15 to 5 mm, particularly preferably from 0.2 to 3 mm.

The laminate of the present invention may be used, in addition to the above applications, for example, for a belt, a rubber cushion and a diaphragm.

EXAMPLES

Now, the present invention will be described in further detail with reference to Examples, but the present invention is by no means restricted to the following description. Ex. 1 to 15 are Examples of the present invention, and Ex. 16 to 18 are

Comparative Examples.

<Measurement method>

(Composition of copolymer 1)

The proportions (mol%) of the respective units constituting each copolymer 1 were obtained by $^{19}$F-nuclear magnetic resonance (NMR) analysis, fluorine content analysis and infrared absorption spectrum analysis.

(Iodine content of copolymer 1)

The iodine content of the copolymer 1 was determined by an apparatus having automatic quick furnace for combustion ion chromatography (manufactured by Mitsubishi Chemical Analytech Co., Ltd., AQF-100) and ion chromatography combined.

(Storage shear modulus G' of copolymer 1)

Measured by using rubber process analyzer (manufactured by ALPHA TECHNOLOGIES, RPA-2000) in accordance with ASTM D5289 and D6204, at a temperature of 100°C at an amplitude of 0.5 at a frequency of 50 cycles/min.

(Mooney viscosity of copolymer 1 and non-fluorinated polymer)

Measured by using Mooney viscometer (manufactured by Shimadzu Corporation, SMV-201) in accordance with JIS K6300-1:2013 using a L rotor having a diameter of 38.1 mm and a thickness of 5.54 mm, at 100°C for a pre-heating time of 1 minute for a rotor revolution time of 4 minutes.

(SP value of copolymer 1 and non-fluorinated polymer)

The SP value $\delta T$ in the present invention is the Hildebrand solubility parameter. The SP value $\delta T$ [(J/cm$^3$)$^{1/2}$] is calculated from the HSP value .

The HSP value in the present invention is the Hansen solubility parameter, and is composed of dispersion force $\delta D$ [(J/cm$^3$)$^{1/2}$], dipolar intermolecular force $\delta P$ [(J/cm$^3$)$^{1/2}$], and hydrogen bonding force $\delta H$ [(J/cm$^3$)$^{1/2}$].

The relation between the SP value and the HSP value is represented by the following formula (i):

$$\delta T^2 = \delta D^2 + \delta P^2 + \delta H^2 \qquad (i)$$

$\delta D$, $\delta P$ and $\delta H$ are calculated from the results of the solubility evaluation test. The solubility test is conducted by the following method. About 5 ml of a solvent the solubility parameter of which is known is put in a glass vial, about 0.2 g of a sample was added and left at rest at 25°C for 72 hours, and whether disintegration (the sheet incapable of keeping its shape) occurs or not is confirmed, and a mass change Q of a sample without disintegration is measured.

The mass change Q is calculated in accordance with the following formula (ii):

$$Q = \{W(after)/W(before)\} \times 100(\%) \qquad (ii)$$

wherein W(after) is the mass of the sample before the test, and W(before) is the mass of the sample after the test.

The solvent the solubility parameter of which is known is acetic acid, acetone, acetonitrile, n-butyl acetate, chloroform, cyclohexane, dimethylformamide (DMF), dimethyl sulfoxide (DMSO), ethyl acetate, methyl ethyl ketone (MEK), methyl isobutyl ketone (MIBK), dichloromethane, propylene carbonate, propylene glycerol monomethyl ether (PM), propylene glycerol monomethyl ether acetate (PMA), tetrahydrofuran (THF), toluene, fluorobenzene, p-fluoroanisole, 2,2,2-trifluoroethanol, and perfluorohexane. With respect to all the above solvents, whether disintegration occurs or not is confirmed, and a mass change Q of a sample without disintegration is measured.

The results of the above measurement are plotted on a three-dimensional graph, and by the Hansen solubility sphere method, $\delta D$, $\delta P$ and $\delta H$ were calculated. For calculation, Data Points mode in Genetic Algorithm option of Sphere Program in Hansen Solubility Parameters in Practice (HSPiP) ver. 5.0.08 was employed. The SP value $\delta T$ was calculated from the obtained $\delta D$, $\delta P$ and $\delta H$ values in accordance with the formula (i).

(Degree of crosslinking of first composition and second composition)

The maximum value of the torque is taken as MH, and the minimum value of the torque is taken as ML, measured by using rubber process analyzer (manufactured by ALPHA TECHNOLOGIES, RPA-2000). The degree of crosslinking is represented by a value obtained by subtracting ML from MH (MH-ML).

<Components>

Copolymer 1-A: Copolymer 1, a copolymer having TFE units and P units, having a proportion of the TFE units of 56 mol% and a proportion of the P units of 44 mol% to all the units constituting the copolymer 1-A, G'=280 kPa, Mooney viscosity =91, SP value =8.8 [(J/cm$^3$)$^{1/2}$], and containing iodine atoms in an amount of 0.4 mass% to the total mass of the copolymer.

Copolymer 1-B: Copolymer 1, a copolymer having TFE units, C3DVE units and P units, having a proportion of the TFE units of 56 mol%, a proportion of the P units of 43.8 mol%, and a proportion of the C3DVE units of 0.2 mol% to all the units constituting the copolymer 1-B, G'=330 kPa, Mooney viscosity=99, SP value =18.1 [(J/cm$^3$)$^{1/2}$], and containing iodine toms in an amount of 0.5 mass% to the total mass of the copolymer.

The copolymer 1-A and the copolymer 1-B may be produced by the methods as described in WO2009/119202 and WO2017/057512, respectively.

Non-fluorinated polymer A: Material of AEM, VAMAC (registered trademark) DP, manufactured by Chemours, Mooney viscosity=20, SP value =18.5 [(J/cm$^3$)$^{1/2}$]

Non-fluorinated polymer B: Material of silicone rubber, KE951U, manufactured by Shin-Etsu Silicone, Mooney viscosity=17, SP value =15 [(J/cm$^3$)$^{1/2}$]

Non-fluorinated polymer C: Material of EPDM, Esprene (registered trademark) E 501A, manufactured by SUMITOMO CHEMICAL COMPANY, LIMITED, Mooney viscosity=43, SP value =16.8 [(J/cm$^3$)$^{1/2}$]

Crosslinking agent A: Organic peroxide, $\alpha,\alpha'$-bis(tert-butylperoxy)diisopropylbenzene, LUPEROX (registered trademark) F40P-SP2 (manufactured by Arkema)

Crosslinking agent B: Organic peroxide, $\alpha,\alpha'$-bis(tert-butylperoxy)diisopropylbenzene, Perkadox 14 (trade name), manufactured by AkzoNobel

Crosslinking agent C: Organic peroxide, C-8 (trade name), manufactured by Shin-Etsu Chemical Co., Ltd.

Crosslinking agent D: Organic peroxide, bis($\alpha$,$\alpha$-dimethylbenzyl) peroxide, PERCUMYL (registered trademark) D, manufactured by NOF Corporation

Crosslinking co-agent A: Triallyl isocyanurate, 1,3,5-triallyl isocyanurate, TAIC (registered trademark), manufactured by Mitsubishi Chemical Corporation
Crosslinking co-agent B: Triallyl isocyanurate, 1,3,5-triallyl isocyanurate, TAIC (registered trademark) WH-60 (trade name), manufactured by Mitsubishi Chemical Corporation
Crosslinking co-agent C: Bismaleimide, HVA-2 (trade name), N,N'-m-phenylene bismaleimide, manufactured by DuPont

Antioxidant: o-Phenylphenol, manufactured by FUJIFILM Wako Pure Chemical Corporation
Carbon black A: THENMAX N-990 (trade name), manufactured by Canarb Limited
Carbon black B: FEF, Asahi #60 (trade name), manufactured by ASAHI CARBON CO., LTD.

Processing aid A: Fatty acid derivative, calcium stearate, manufactured by FUJIFILM Wako Pure Chemical Corporation
Processing aid B: Higher fatty acid, stearic acid, manufactured by FUJIFILM Wako Pure Chemical Corporation
Processing aid C: Fatty acid derivative, Emaster 510P (trade name), manufactured by RIKEN VITAMIN CO., LTD.
Processing aid D: Nitrogen-containing compound, LIPOMIN 18D (trade name), manufactured by Lion Specialty Chemicals Co., Ltd.
Processing aid E: Phosphoric acid derivative, PHOSPHANOL RL-210 (trade name), manufactured by TOHO Chemical Industry Co., Ltd.
Processing aid F: Fatty acid derivative, oleic acid glyceride, RIKEMAL XO-100 (trade name), manufactured by RIKEN VITAMIN CO., LTD.

Age resister: Hindered amine, NOCRAC CD (trade name), manufactured by OUCHI SHINKO CHEMICAL INDUSTRIAL CO., LTD.
Filler A: Silica, AEROSIL 8200 (trade name), manufactured by NIPPON AEROSIL CO., LTD.
Filler B: Titanium dioxide, SA-1 (trade name), manufactured by SAKAI CHEMICAL INDUSTRY CO., LTD.
Filler C: Silica, AEROSIL 300 (trade name), manufactured by NIPPON AEROSIL CO., LTD.
Crosslinking promoter A: Zinc oxide, manufactured by SEIDO CHEMICAL INDUSTRY CO., LTD.

<Preparation of first composition and second composition>

The respective components were uniformly kneaded in mass ratios as identified in Table 1 or 2 using a twin roll mill to prepare first compositions P1 to P16 and second compositions Q1 to Q15. The degree of crosslinking (MH-ML) of each composition was measured by the above method. The results are shown in Tables 1 and 2. In Tables 1 and 2, "RPA conditions" means crosslinking conditions for measuring MH-ML using rubber process analyzer (manufactured by ALPHA TECHNOLOGIES, RPA-2000). For example, "170°C×12 min" means that the first composition or the second composition was reacted at 170°C for 12 minutes.

[Table 1]

| First composition | P1 | P2 | P3 | P4 | P5 | P6 | P7 | P8 | P9 | P10 |
|---|---|---|---|---|---|---|---|---|---|---|
| Copolymer 1-A | - | 30 | - | - | 100 | 100 | 100 | 100 | 100 | 100 |
| Copolymer 1-B | 100 | 70 | 100 | 100 | - | - | - | - | - | - |
| Crosslinking agent A | 1 | - | - | - | - | - | 1 | - | - | - |
| Crosslinking agent B | - | 1 | 1 | 1 | - | 1.5 | - | 1.5 | - | - |
| Crosslinking agent D | - | - | - | - | 1.5 | - | - | - | 1.5 | 1.5 |
| Crosslinking co-agent A | 3 | 3 | 3 | - | 5 | 5 | 5 | 5 | 5 | 5 |
| Crosslinking co-agent B | - | - | - | 5 | - | - | - | - | - | - |
| Antioxidant | - | - | - | - | - | - | 0.3 | - | 1.18 | 1.18 |
| Carbon black A | - | - | 30 | - | 30 | 30 | 30 | 30 | 30 | - |
| Processing aid A | 1 | 1 | 1 | 1 | 1 | 1 | 1 | 1 | 1 | 1 |
| Processing aid C | - | - | - | - | - | - | 2 | - | - | - |
| Processing aid F | 0.5 | - | - | - | - | 1 | - | 1 | 1 | 1 |
| Filler A | 5 | 5 | - | - | - | - | - | - | - | 5 |
| Filler B | - | - | - | 3 | - | - | - | - | - | - |
| RPA conditions | 160°C× 12 min | 160°C× 12 min | 160°C× 12 min | 160°C× 12 min | 145°C× 60 min | 145°C× 60 min | 160°C× 12 min | 145°C× 60 min | 145°C× 60 min | 145°C× 60 min |
| ML of composition | 7.48 | 7.64 | 12.3 | 10.2 | 5.4 | 5.4 | 3.1 | 5.4 | 4.2 | 4.0 |
| Degree of crosslinking MH-ML | 31.04 | 46.02 | 73.40 | 53.50 | 39.19 | 41.59 | 24.08 | 41.59 | 21.48 | 19.79 |

[Table 1] (Continued)

| First composition | P11 | P12 | P13 | P14 | P15 | P16 |
|---|---|---|---|---|---|---|
| Copolymer 1-A | 100 | 100 | 100 | 100 | 100 | 100 |
| Copolymer 1-B | - | - | - | - | - | - |
| Crosslinking agent A | - | - | - | - | 1 | - |
| Crosslinking agent B | - | - | - | - | - | - |
| Crosslinking agent D | 1.5 | 1.5 | 1.5 | 1.5 | - | 1.5 |
| Crosslinking co-agent A | 5 | 5 | 5 | 5 | 5 | 5 |
| Crosslinking co-agent B | - | - | - | - | - | - |
| Antioxidant | 1.18 | 1.18 | 1.18 | 1.18 | - | 1.18 |
| Carbon black A | 30 | 20 | 20 | 30 | 10 | 30 |
| Processing aid A | 1 | 1 | 1 | 1 | 1 | 1 |
| Processing aid C | - | - | - | 2 | 2 | - |
| Processing aid F | 1 | 1 | 1 | - | - | 1 |
| Filler A | - | 2 | 5 | - | - | - |
| Filler B | - | - | - | - | - | - |
| RPA conditions | 145°C× 60 min | 145°C× 60 min | 145°C× 60 min | 145°C× 60 min | 170°C× 20 min | 145°C× 60 min |
| ML of composition | 4.2 | 4.4 | 4.8 | 4.2 | 2.9 | 4.2 |
| Degree of crosslinking MH-ML | 21.48 | 21.16 | 22.38 | 24.30 | 29.05 | 21.48 |

[Table 2]

| Second composition | Q1 | Q2 | Q3 | Q4 | Q5 | Q6 | Q7 | Q8 | Q9 | Q10 |
|---|---|---|---|---|---|---|---|---|---|---|
| Non-fluorinated polymer A | - | - | - | - | - | - | - | - | - | - |
| Non-fluorinated polymer B | 100 | 100 | 100 | 100 | 100 | 100 | 100 | - | - | - |
| Non-fluorinated polymer C | - | - | - | - | - | - | - | 100 | 100 | 100 |
| Crosslinking agent A | 1 | - | - | - | - | - | - | - | - | - |
| Crosslinking agent B | - | 1 | - | - | - | - | - | 2 | 2 | 2 |
| Crosslinking agent C | - | - | - | 2 | 2 | - | 2 | - | - | - |
| Crosslinking agent D | - | - | - | - | - | 1 | - | - | - | - |
| Crosslinking co-agent A | 2 | 2 | 2 | 2 | 0.5 | 2 | 2 | 1 | 1 | 1 |
| Crosslinking co-agent C | - | - | - | | | | | - | - | - |
| Antioxidant | 0.1 | 0.1 | 0.1 | - | - | - | - | - | - | - |
| Carbon black A | - | - | - | | | | | - | - | 50 |
| Carbon black B | - | - | - | | | | | 50 | 20 | - |
| Processing aid B | - | - | - | - | - | - | - | 0.5 | 0.5 | 0.5 |
| Processing aid D | - | - | - | | | | | - | - | - |
| Processing aid E | - | - | - | - | - | - | - | - | - | - |
| Processing aid F | - | - | 1 | - | - | - | - | - | - | - |
| Age resister | - | - | - | - | - | - | - | - | - | - |
| Filler C | - | 9 | 9 | - | - | - | - | - | - | - |
| Crosslinking promotor | - | - | - | - | - | - | - | 5 | 5 | 5 |
| RPA conditions | 160°C× 12 min | 160°C× 12 min | 160°C× 12 min | 160°C× 12 min | 160°C× 12 min | 145°C× 60 min | 145°C× 60 min | 170°C× 20 min | 145°C× 60 min | 145°C× 60 min |
| ML of composition | 1.62 | 7.44 | 7.78 | 1.6 | 1.2 | 1.6 | 1.7 | 5.3 | 5.2 | 5.5 |
| Degree of crosslinking MH-ML | 37.02 | 67.31 | 45.54 | 58.40 | 47.38 | 55.77 | 53.61 | 169.02 | 76.70 | 79.08 |

[Table 2] (Continued)

| | Q11 | Q12 | Q13 | Q14 | Q15 |
|---|---|---|---|---|---|
| Second composition | | | | | |
| Non-fluorinated polymer A | - | 100 | 100 | 100 | 100 |
| Non-fluorinated polymer B | - | - | - | - | - |
| Non-fluorinated polymer C | 100 | - | - | - | - |
| Crosslinking agent A | - | - | - | - | - |
| Crosslinking agent B | 2 | - | 4 | - | - |
| Crosslinking agent C | - | - | - | - | - |
| Crosslinking agent D | - | 6 | - | 4 | 4 |
| Crosslinking co-agent A | 1 | 4 | 2 | 2 | 2 |
| Crosslinking co-agent C | - | - | - | - | - |
| Antioxidant | - | - | - | - | - |
| Carbon black A | 50 | - | - | - | - |
| Carbon black B | - | 55 | 55 | 55 | 55 |
| Processing aid B | 0.5 | 0.5 | 0.5 | 0.5 | 0.5 |
| Processing aid D | - | 0.5 | 0.5 | 0.5 | 0.5 |
| Processing aid E | - | 1.25 | 1.25 | 1.25 | 1.25 |
| Processing aid F | - | - | - | - | - |
| Age resister | - | 1 | 1 | 1 | 1 |
| Filler C | - | - | - | - | - |
| Crosslinking promotor | 5 | - | - | - | - |
| RPA conditions | 145°C× 60 min | 145°C× 60 min | 170°C× 12 min | 145°C× 60 min | 145°C× 60 min |
| ML of composition | 6.3 | 1.6 | 1.1 | 1.2 | 1.7 |
| Degree of crosslinking MH-ML | 91.34 | 136.29 | 86.70 | 53.61 | 75.05 |

<Ex. 1 to 18>

The combination of the first composition and the second composition in each of Ex. 1 to 18 is shown in Table 3.

The first composition and the second composition as identified in Table 3 were combined to produce a laminate. Specifically, the first composition and the second composition were respectively formed into a size of 125 mm in length × 30 mm in width × 1.1 mm in thickness and bonded in a combination as identified in Table 3 and preliminarily press-bonded at 70°C for 5 minutes. Then, steam vulcanization was conducted under the crosslinking conditions as identified in Table 3 to obtain a laminate in each of Ex. 1 to 18, having a first crosslinked layer and a second crosslinked layer in a size of 120 mm in length × 25 mm in width × 2 mm in thickness. At the time of preparation, a release film of 60 mm in length × 30 mm in width was sandwiched between the layer of the first composition and the layer of the second composition so that a half in a length direction of the laminate constituted a holding portion not bonded.

In Table 3, the absolute value of the difference between ML of the first composition and ML of the second composition in each Ex., and the absolute value of the difference in the degree of crosslinking between the first composition and the second composition in each Ex. in accordance with the above formula 3, were measured.

The holding part of each of the laminates in Ex. 1 to 18 was set to a T-peel test machine (JIS K6854-3:1999), and the laminate was subjected to peeling at a rate of 50 mm per minute at 150°C, and the peel state between the first crosslinked layer and the second crosslinked layer was visually observed to evaluate interlaminar bonding at high temperature. Interlaminar bonding at high temperature of a laminate of which no peeling at the interface was observed and material fracture occurred, was rated "@", interlaminar bonding at high temperature of a laminate of which peeling was observed at a part of the interface and material fracture occurred at a part, was rated "O", and interlaminar bonding at high temperature of a laminate of which peeling at the interface was observed, was rated "×". The evaluation results are shown in Table 3. In T-peel test, material fracture at the peel surface indicates favorable interlaminar bonding, and peeling at the interface indicates poor interlaminar bonding.

[Table 3]

| Ex. | First composition | Second composition | Crosslinking conditions | ML difference | MH-ML difference | Interlaminar bonding at high temperature | Interlaminar bonding at room temperature |
|---|---|---|---|---|---|---|---|
| 1 | P1 | Q3 | 145°C×60 min | 0.3 | 14.5 | ◎ | ◎ |
| 2 | P2 | Q2 | 145°C×60 min | 0.2 | 21.3 | ◎ | ◎ |
| 3 | P8 | Q9 | 145°C×60 min | 0.2 | 35.1 | ◎ | ◎ |
| 4 | P9 | Q10 | 145°Cx60 min | 1.3 | 57.6 | ◎ | ◎ |
| 5 | P14 | Q11 | 145°C×60 min | 2.1 | 67.0 | ◎ | ◎ |
| 6 | P15 | Q13 | 170°Cx30 min | 1.8 | 57.7 | ◎ | ◎ |
| 7 | P13 | Q11 | 145°C×60 min | 1.5 | 69.0 | ◎ | ◎ |
| 8 | P12 | Q11 | 145°C×60 min | 1.9 | 70.2 | ◎ | ◎ |
| 9 | P7 | Q8 | 170°Cx30 min | 2.2 | 144.9 | ◎ | ◎ |
| 10 | P10 | Q11 | 145°Cx60 min | 2.3 | 71.6 | ◎ | ◎ |
| 11 | P16 | Q15 | 145°Cx60 min | 2.5 | 53.6 | ◎ | ◎ |
| 12 | P14 | Q12 | 145°Cx60 min | 2.6 | 112.0 | ◎ | ◎ |
| 13 | P16 | Q14 | 145°Cx60 min | 3 | 32.1 | ◎ | ◎ |
| 14 | P6 | Q7 | 145°Cx60 min | 3.7 | 12.0 | ◎ | ◎ |
| 15 | P5 | Q6 | 145°Cx60 min | 3.8 | 16.6 | ◎ | ◎ |
| 16 | P1 | Q1 | 145°C×60 min | 5.86 | 6.0 | × | × |
| 17 | P4 | Q5 | 160°C×10 min | 9 | 6.1 | × | × |
| 18 | P3 | Q4 | 160°C×10 min | 10.7 | 15.0 | × | × |

In Ex. 1 to 15, the absolute value of the difference between ML of the first composition and ML of the second composition was at most 5.0, and thus the laminate had interlaminar bonding at high temperature.

In Ex. 16 to 18, the absolute value of the difference between ML of the first composition and ML of the second composition was higher than 5.0, and thus the laminate was inferior in interlaminar bonding at high temperature.

INDUSTRIAL APPLICABILITY

The laminate obtained by the method for producing a laminate of the present invention, and the laminate of the present invention, are suitable as a material for not only hoses but also e.g. O-rings, sheets, gaskets, oil seals, diaphragms and V-rings. Further, they are also useful for applications, such as heat-resistant chemical-resistant sealing materials, heat-resistant oil-resistant sealing materials, electric wire coating materials, sealing materials for semiconductor equipment, corrosion-resistant rubber paints, sealing materials for urea-resistant grease, rubber paints, calendered sheets, sponges, rubber rolls, members for oil drilling, heat dissipating sheets, solution crosslinkers, rubber sponges, bearing seals (urea resistant grease, etc.), lining (chemical resistant), automotive insulating sheets, packings for endoscope (amine resistant), mohno pumps, bellows hoses (calendered sheet products), packings and valves for water heaters, fenders (marine civil engineering, ships), fibers and non-woven fabrics (protective clothing, etc.), sealing materials for substrate, rubber gloves, button switches, food container packings and water bottle packings.

The entire disclosure of Japanese Patent Application No. 2019-072264 filed on April 4, 2019 including specification, claims and summary is incorporated herein by reference in its entirety.

**Claims**

1. A method for producing a laminate, which comprises producing a laminate having a layer of a first composition containing a fluorinated polymer which is a copolymer having units based on tetrafluoroethylene and units based on propylene or a copolymer having units based on tetrafluoroethylene and units based on a perfluoro(alkyl vinyl ether), a crosslinking agent and a crosslinking co-agent, and a layer of a second composition containing a non-fluorinated polymer and a crosslinking agent; and

   reacting the first composition and the second composition to produce a laminate having a first crosslinked layer formed of the first composition and a second crosslinked layer formed of the second composition, wherein the absolute value of the difference between ML of the first composition and ML of the second composition is from 0 to 5.0, where ML is the minimum value of the torque when crosslinking test is carried out by a rubber process analyzer.

2. The method for producing a laminate according to Claim 1, wherein the second composition further contains a crosslinking co-agent.

3. The method for producing a laminate according to Claim 1 or 2, wherein the absolute value of the difference between the degree of crosslinking of the first composition as shown in the following formula 3 and the degree of crosslinking of the second composition as shown in the following formula 3 is from 0 to 200:

$$\text{degree of crosslinking} = MH - ML \qquad \text{formula 3}$$

   wherein MH is the maximum value of the torque, and ML is the minimum value of the torque, when crosslinking test is carried out by a rubber process analyzer.

4. The method for producing a laminate according to any one of Claims 1 to 3, wherein each of the crosslinking agents in the first composition and in the second composition is an organic peroxide.

5. The method for producing a laminate according to any one of Claims 1 to 4, wherein the copolymer having units based on tetrafluoroethylene and units based on propylene contained in the first composition further has iodine atoms.

6. The method for producing a laminate according to any one of Claims 1 to 5, wherein the copolymer having units based on tetrafluoroethylene and units based on a perfluoro(alkyl vinyl ether) contained in the first composition further has iodine atoms.

7. The method for producing a laminate according to any one of Claims 1 to 6,

wherein the copolymer having units based on tetrafluoroethylene and units based on propylene contained in the first composition further has units based on a monomer having two or more polymerizable unsaturated bonds.

8. The method for producing a laminate according to any one of Claims 1 to 7, wherein the copolymer having units based on tetrafluoroethylene and units based on a perfluoro(alkyl vinyl ether) contained in the first composition further has units based on a monomer having two or more polymerizable unsaturated bonds.

9. The method for producing a laminate according to Claim 7 or 8, wherein the units based on a monomer having two or more polymerizable unsaturated bonds are a compound represented by the following formula 4:

$$CR^1R^2=CR^3\text{-}R^4\text{-}CR^5=CR^6R^7 \qquad \text{formula 4}$$

wherein $R^1$, $R^2$, $R^3$, $R^5$, $R^6$ and $R^7$ are each independently a hydrogen atom, a fluorine atom or a methyl group, $R^4$ is a $C_{1\text{-}25}$ alkylene group, a $C_{1\text{-}25}$ alkylene group having an etheric oxygen atom, a $C_{1\text{-}25}$ fluoroalkylene group, a $C_{1\text{-}25}$ fluoroalkylene group having an etheric oxygen atom, or an oxygen atom.

10. A laminate having a first crosslinked layer formed of a first composition containing a fluorinated polymer which is a copolymer having units based on tetrafluoroethylene and units based on propylene or a copolymer having units based on tetrafluoroethylene and units based on a perfluoro(alkyl vinyl ether), a crosslinking agent and a crosslinking co-agent, and a second crosslinked layer formed of a second composition containing a non-fluorinated polymer and a crosslinking agent,
wherein the absolute value of the difference between ML of the first composition and ML of the second composition is from 0 to 5.0, where ML is the minimum value of the torque when crosslinking test is carried out by a rubber process analyzer.

11. A rubber hose using the laminate as defined in Claim 10.

## INTERNATIONAL SEARCH REPORT

| International application No. |
| --- |
| PCT/JP2020/015041 |

**A. CLASSIFICATION OF SUBJECT MATTER**

B32B 25/14(2006.01)i; B32B 27/30(2006.01)i; F16L 11/04(2006.01)i
FI: B32B25/14; B32B27/30 D; F16L11/04

According to International Patent Classification (IPC) or to both national classification and IPC

**B. FIELDS SEARCHED**

Minimum documentation searched (classification system followed by classification symbols)
B32B1/00-43/00; F16L11/04; B29C35/02

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2007/148759 A1 (DAIKIN INDUSTRIES, LTD.) 27.12.2007 (2007-12-27) claims, paragraphs [0021]- [0022], [0070], [0102], table 1, paragraph [0122] | 1-11 |
| A | JP 2018-52054 A (SUMITOMO RIKO CO., LTD.) 05.04.2018 (2018-04-05) claims, paragraphs [0025]- [0027] | 1-11 |
| A | JP 2004-17485 A (ASAHI GLASS CO., LTD.) 22.01.2004 (2004-01-22) claims, paragraphs [0011]-[0013], [0020], [0023], examples 1, 2, 4, 5 | 1-11 |
| A | JP 11-129398 A (DAIKIN INDUSTRIES, LTD.) 18.05.1999 (1999-05-18) claims, paragraphs [0005], [0010], [0012]-[0015], [0028], example 2 | 1-11 |

☒ Further documents are listed in the continuation of Box C. ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 16 June 2020 (16.06.2020) | 30 June 2020 (30.06.2020) |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2020/015041 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2013/108856 A1 (ASAHI GLASS CO., LTD.) 25.07.2013 (2013-07-25) claims, paragraphs [0004], [0011], [0015], examples 2, 5, 6 | 1-11 |
| P, A | WO 2019/070039 A1 (AGC INC.) 11.04.2019 (2019-04-11) clams, paragraphs [0028], [0030], [0031]-[0032] | 1-11 |

Form PCT/ISA/210 (continuation of second sheet) (January 2015)

**INTERNATIONAL SEARCH REPORT**
Information on patent family members

International application No.

PCT/JP2020/015041

| Patent Documents referred in the Report | Publication Date | Patent Family | Publication Date |
|---|---|---|---|
| WO 2007/148759 A1 | 27 Dec. 2007 | CN 101479336 A | |
| CN 101479336 A | 05 Apr. 2018 | (Family: none) | |
| JP 2004-17485 A | 22 Jan. 2004 | (Family: none) | |
| JP 11-129398 A | 18 May 1999 | US 6730385 B1 claims, column 2, lines 15-27, column 3, lines 11-24, column 3, line 38 to column 4, line 32, column 6, lines 1-16, example 2 WO 1999/021710 A1 EP 1025987 A1 TW 559592 B CN 1277575 A KR 10-2001-0024557 A | |
| WO 2013/108856 A1 | 25 Jul. 2013 | US 2014/0329096 A1 claims, paragraphs [0005]-[0006], [0040]-[0042], [0050], examples 2, 5, 6 EP 2805988 A1 CN 104093769 A | |
| WO 2019/070039 A1 | 11 Apr. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05320453 A
- WO 0056694 A
- WO 2009119202 A
- WO 2010053056 A
- WO 2010082633 A
- WO 2017057512 A
- JP 2019072264 A